**Europäisches Patentamt**

**European Patent Office**

**Office européen des brevets**

(11) Veröffentlichungsnummer: **0 134 398**
**B1**

(12) **EUROPÄISCHE PATENTSCHRIFT**

(45) Veröffentlichungstag der Patentschrift:
**20.07.88**

(21) Anmeldenummer: **84104533.9**

(22) Anmeldetag: **21.04.84**

(51) Int. Cl.⁴: **B 23 Q 5/26,** B 23 Q 1/18

(54) **Bausteinartiger kolbenbetriebener Linearantrieb.**

(30) Priorität: **27.08.83 DE 3330933**
**28.03.84 DE 3411404**

(43) Veröffentlichungstag der Anmeldung:
**20.03.85 Patentblatt 85/12**

(45) Bekanntmachung des Hinweises auf die Patenterteilung:
**20.07.88 Patentblatt 88/29**

(84) Benannte Vertragsstaaten:
**CH FR GB IT LI SE**

(56) Entgegenhaltungen:
**FR-A-1 222 358**
**FR-A-2 277 260**
**US-A-2 450 972**
**US-A-2 563 918**
**US-A-2 584 428**
**US-A-3 994 539**
**US-A-4 403 389**

(73) Patentinhaber: **Toss, Franco, Hainstrasse 13, D-6305 Alten- Buseck (DE)**

(72) Erfinder: **Toss, Franco, Hainstrasse 13, D-6305 Alten- Buseck (DE)**

(74) Vertreter: **Jochem, Bernd, Dipl.- Wirtsch.- Ing., Patentanwälte Beyer & Jochem Postfach 17 01 45, D-6000 Frankfurt/Main (DE)**

LIBER, STOCKHOLM 1988

## Beschreibung

Die Erfindung betrifft einen bausteinartigen Linearantrieb, einsatzfähig als tragendes Stellelement, bestehend aus einem Zylinderkörper mit einer Längsbohrung, in welcher ein pneumatisch oder hydraulisch mit Druck beaufschlagbarer Kolben gleitet, der über eine Kolbenstange mit einem Kopfteil verbunden ist, an welchem ein zu bewegendes Teil befestigbar ist, wobei zwischen dem Zylinderkörper und dem Kopfteil eine Linearführung mit Rollkörpern zur Entlastung des Kolbens von Seitenkräften vorhanden ist.

Derartige modulare Stellelemente für Linear-Bewegungen sind z. B. in der US-A-3 994 539 beschrieben und finden vor allem bei Spezialmaschinen und Montageautomaten als sogenannte "Handling-Elemente" Verwendung. Sie bilden inzwischen eine Gattung von Maschinenelementen, aus der bei Bedarf nach Hub- und Antriebskraft bestimmte Größen ausgewählt werden, wobei in der Praxis zahlenmäßig die Ausführungen mit einem maximalen Hub von etwa 4 - 10 cm überwiegen. Bei diesen kurzen Hüben und in Anbetracht der normalerweise bei Montageautomaten dicht nebeneinander auf engstem Raum angeordneten Vielzahl von Förder-, Halte- und Werkzeugeinheiten mit ihren jeweiligen Antrieben sollten auch die Stellelemente für die jeweils geforderten Leistungen möglichst klein sein.

Aus der Tatsache, daß die genannten Stellelemente Standard-Bausteine sind, bei deren Herstellung im Einzelfall noch nicht die Art der späteren, evtl. wechselnden Verwendung und die Lage im montierten Zustand bekannt sind, ergeben sich die weiteren Forderungen nach Spielfreiheit und möglichst guter Steifigkeit auch bei seitlicher Belastung bis zur maximal ausgefahrenen Stellung des Kopfteils sowie schließlich nach im Verhältnis zur Dimensionierung möglichst großen, ebenen Befestigungsflächen sowohl am Zylinderkörper als auch am Kopfteil.

Die bisher erhältlichen bausteinartigen Linearantriebe erfüllen die genannten Forderungen nur unzulänglich, da sich normalerweise das Kopfteil auch schon bei ganz zurückgezogenem Kolben vollständig axial neben dem Zylinder befindet. Eine solche Einheit wird etwa doppelt so lang wie ihr Zylinderkörper, wenn an diesem und am Kopfteil gleich große, seitliche Befestigungsflächen gefordert werden. Außerdem müssen als zusätzliche Einzelteile besondere Stangenführungen parallel zur Kolbenstange vorgesehen werden, um diese von Seitenkräften zu entlasten. Die Stangenführungen oder mehrere parallele Kolbenstangen werden auch zur Verhinderung von Drehbewegungen des Kopfteils um die Zylinderachse gebraucht, wenn nicht gemäß US-A-3 994 539 ein unrunder Querschnitt der Kolbenstange und entsprechend zugehörige unrunde Bohrungen oder z. B. gemäß der FR-A-2 277 260 ein unrunder Kolbenquerschnitt gewählt werden. Auch dies sind aufwendige Sondermaßnahmen. Die die Stangen führenden Rollkörper sind regelmäßig axial fest im Zylinder angeordnet, so daß sich die Spielfreiheit und Belastbarkeit durch Querkräfte beim Ausfahren des Kopfteils gegenüber dem zurückgezogenen Zustand wesentlich verschlechtern.

Die vorstehend genannten Nachteile gelten entsprechend auch für Stellelemente mit nach entgegengesetzten Seiten aus dem Zylinder herausgeführten Kolbenstangen mit zwei Kopfteilen an den Enden gemäß US-A-3 994 539. Ein Unterschied besteht lediglich darin, daß hier nicht der Zylinderkörper sehr viel länger ist als das Kopfteil, sondern umgekehrt das mit dem Kolben verbundene Element wesentlich länger ist als der Zylinderkörper, wobei das Verhältnis zwischen Gesamtlänge und Hub besonders ungünstig ist.

Für hydraulische Schlittenantriebe von Drehbänken und anderen Werkzeugmaschinen gelten andere Bedingungen, und es haben sich deshalb auch seit Jahrzehnten andere Konstruktionen entwickelt als bei Hubzylinder-Einheiten der eingangs genannten Art. Normalerweise kennt man bei der Herstellung eines speziellen Vorschubantriebs sehr genau die Einsatzverhältnisse und die im Betrieb auftretenden Belastungsrichtungen. Man braucht nicht damit zu rechnen, daß ein bestimmungsgemäß horizontal angeordneter, von oben belasteter Schlitten senkrecht oder mit der Oberseite nach unten montiert wird. Dementsprechend brauchen auch die Führungen nicht allseitig spielfrei und gleich stark belastbar zu sein, sondern es genügt z. B., daß sich der Schlitten infolge Eigengewichts und Belastung in eine V-förmige Gleitführung setzt und durch eine Gegenleiste - wegen der Reibung mit einem gewissen Spiel - lediglich gegen Abheben gesichert wird. Die Spezialität eines Drehbank-Schlittenantriebs äußert sich gemäß US-A-2 450 972 auch darin, daß der Zylinder keine montierbare Einheit, sondern unmittelbar im Maschinenbett ausgebildet ist. Weil genügend Platz zur Verfügung steht, kann zur Vermeidung von in Querrichtung wirkenden Momenten bei ausgefahrener Kolbenstange die Gleitführung für den Schlitten doppelt so lang sein wie der Zylinder, und die Kolbenstange kann auf beiden Seiten aus dem Zylinder herausgeführt sein, so daß Schlitten, Führung und Antrieb bei zurückgezogenem Kolben insgesamt etwa dreimal so lang sind wie der Zylinder.

Selbst wenn gemäß US-A-2 563 918 der Werkzeugschlitten, die Führung und der Antrieb eine auf dem Bett einer Drehbank oder einer anderen Werkzeugmaschine montierbare Baueinheit bilden, kann dieses voluminöse Aggregat kein Vorbild für bausteinartige Linearantriebe der eingangs genannten Art sein. Während bei den letzteren das Bestreben dahin geht, Stellelemente in kleiner, kompakter Bauweise zu verwenden, zeigt der bekannte Werkzeugschlittenantrieb ein großes gemeinsames Zylindergehäuse für zwei Kolben für Schlittenbewegungen in Längs- und Querrichtung. Da die beiden Zylinderbohrungen axial hintereinander angeordnet sind, ergibt sich insgesamt eine große Baulänge, und weil auch hier genügend Platz zur Verfügung steht, ist der Schlitten wesentlich länger als jeder Zylinder und doch nur mit einer kurzen Spannfläche zur Befestigung eines Werkzeugträgers ausgebildet. Im übrigen wird dort die Spannfläche des Schlittens im Gegensatz zum Kopfteil von Stellelementen beim Ausfahren des Kolbens aus einer ohnehin nur wenig über das eine Ende des Zylindergehäuses vorkragenden Stellung nicht weiter vorgeschoben, sondern zurückgezogen. Schließlich unterscheidet sich der bekannte Werkzeugschlittenantrieb von bausteinartigen Linearantrieben auch dadurch, daß wegen des weiteren Kolbens für Querbewegungen des Schlittens sowie wegen der Anordnung von Steuerstangen und Steuerzylindern im Zylindergehäuse praktisch nur dessen Unterseite zur Befestigung auf einem Maschinenbett bestimmt und geeignet ist.

Durch die FR-A-1 222 358 ist es zwar bekannt, Werkzeugmaschinenschlitten auf Kugeln zu lagern, die in Kanälen laufen, welche durch Nuten und Gegennuten in gegenüberliegenden Seitenflächen des Schlittens und des Maschinenbetts gebildet sind, dabei ist jedoch vorgesehen, daß der Schlitten nach beiden Seiten über die Enden des Betts aus fahren kann. Dies läßt sich mit einem normalen Kolbenantrieb nicht erreichen, ohne daß in der mittleren Stellung der Zylinderkörper und/oder die Kolbenstange über die axialen Enden des Betts vorstehen, wodurch wieder die Länge vergrößert würde.

Der Erfindung liegt die Aufgabe zugrunde, einen bausteinartigen Linearantrieb der eingangs genannten Art zu schaffen, der trotz kurzer, kompakter Bauweise an beiden relativ zueinander beweglichen Teilen etwa gleich große Befestigungsflächen aufweisen kann und eine auch bei Belastung durch Seitenkräfte sehr leichtgängige Führung hat, die keiner Führungsstangen als zusätzliche Einzelteile mehr bedarf und beim Ausfahren der Kolbenstange ihre Führungs- und Trageigenschaften nur wenig verändert.

Vorstehende Aufgabe wird erfindungsgemäß dadurch gelöst, daß das Kopfteil im Querschnitt U-förmig ausgebildet ist und den Zylinderkörper übergreift, wobei der Zylinderkörper und das Kopfteil etwa gleich lang ausgebildet sind und das Kopfteil mit dem überwiegenden Teil seiner Länge den Zylinderkörper übergreift, und daß Nuten entlang den Längsaußenseiten des Zylinderkörpers und Gegennuten in im wesentlichen gleicher Länge entlang den übergreifenden Längsinnenseiten des Kopfteils derart angeordnet sind, daß sie Kanäle bilden, in denen bei Bewegung des Kolbens die Rollkörper laufen.

Der neue bausteinartige Linearantrieb gestattet besonders vielfältige, verschiedenartige Anwendungen, da das Kopfteil praktisch eine ebenso große, ebene Befestigungsfläche bietet wie der Zylinderkörper.

Wegen der Lage der Hauptbefestigungsflächen im eingezogenen Zustand nebeneinander statt axial hintereinander, wie sonst bei bausteinartigen Linearantrieben üblich, können als Geradführung Laufbahnen für Rollkörper an beiden Teilen vorgesehen werden, in denen die Rollkörper beim Ausfahren des Kopfteils den halben Hub zurücklegen und dadurch im Vergleich zu ortsfest am Zylinder angeordneten Lagern für eine gleichmäßigere Abstützung des Kopfteils in den vorgeschobenen Stellungen sorgen. Dabei bleibt die Geradführung trotz Spielfreiheit in jeder Richtung leichtgängig, weil in der Führung statt einer Gleitbewegung nur die Abwälzbewegung der Rollkörper stattfindet.

Wenn im Einzelfall eine besonders flache Ausführung gewünscht ist, kann in bevorzugter Ausgestaltung der Erfindung eine bestimmte, geforderte Kolbenfläche und Kolbenkraft auch dadurch erreicht werden, daß mehrere Längsbohrungen mit Kolben in dem Zylinderkörper vorgesehen werden, oder daß für Längsbohrungen eine unrunde Form gewählt wird.

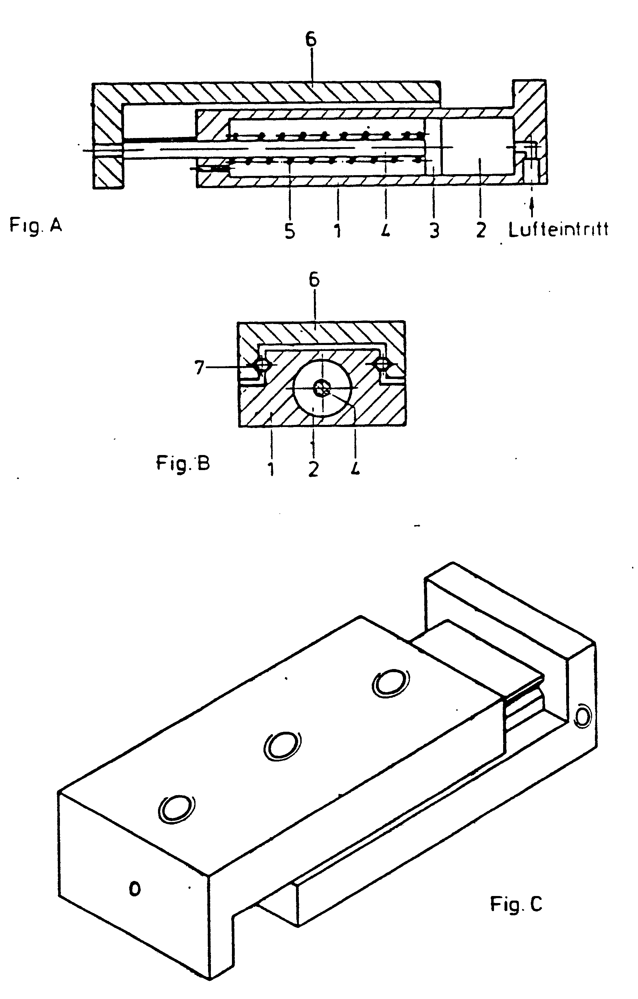

Ein Ausführungsbeispiel der Erfindung ist in der Zeichnung gezeigt, wobei die Fig. A den Längsschnitt, Fig. B den Querschnitt und Fig. C eine Perspektive darstellt.

In Fig. A ist der Zylinderkörper mit 1 und die Längsbohrung mit 2 bezeichnet. Weiterhin gezeigt sind ein Kolben 3, eine Kolbenstange 4, eine Rückfeder 5 und ein U-Profilkörper 6 als Kopfteil des bausteinartigen Linearantriebs.

In Fig. B sind der Zylinderkörper 1, die Längsbohrung 2, die Kolbenstange 4, der U-Profilkörper 6 und Kugeln 7 gezeigt.

Es handelt sich bei dem erfindungsgemäßen Linearantrieb um einen normalen Zylinderkörper mit Kolben 3 und Kolbenstange 4 mit integrierten Führungen. Er besteht aus zwei ungefähr gleich langen Körpern, nämlich dem Zylinderkörper 1 als Unterteil und dem U-Profilkörper 6 als Oberteil bzw. Kopfteil, die beide mit Nuten versehen sind, in denen die Kugeln 7 als Rollkörper sitzen. In der Längsbohrung 2 des Zylinders 1 gleitet der Kolben 3. Die Kolbenstange 4 ist mit dem Oberteil 6 verbunden. Beide Körper 1 und 6 haben mehrere Befestigungsbohrungen für die verschiedensten Ein- und Anbaumöglichkeiten.

Der Zylinderkörper 1 kann an den vier freien Seiten angebaut werden, und das zu bewegende Teil wird an dem U-Profilkörper 6 befestigt.

Nach Beaufschlagung mit z. B. Luft bewegt der Kolben 3 das Oberteil 6. Dadurch, daß letzteres auf den Kugeln 7 läuft, können allseitig erhebliche Kräfte auf dieses Teil einwirken.

## Patentansprüche

1. Bausteinartiger Linearantrieb, einsatzfähig als tragendes Stellelement, bestehend aus einem Zylinderkörper (1) mit einer Längsbohrung (2), in welcher ein pneumatisch oder hydraulisch mit Druck beaufschlagbarer Kolben (3) gleitet, der über eine Kolbenstange (4) mit einem Kopfteil (6) verbunden ist, an welchem ein zu bewegendes Teil befestigbar ist, wobei zwischen dem Zylinderkörper (1) und dem Kopfteil (6) eine Linearführung mit Rollkörpern (7) zur Entlastung des Kolbens (3) von Seitenkräften vorhanden ist, dadurch gekennzeichnet, daß das Kopfteil (6) im Querschnitt U-förmig ausgebildet ist und den Zylinderkörper übergreift, wobei der Zylinderkörper (1) und das Kopfteil (6) etwa gleich lang ausgebildet sind und das Kopfteil (6) mit dem überwiegenden Teil seiner Länge den Zylinderkörper übergreift, und daß Nuten entlang den Längsaußenseiten des Zylinderkörpers (1) und Gegennuten in im wesentlichen gleicher Länge entlang den übergreifenden Längsinnenseiten des Kopfteils (6) derart angeordnet sind, daß sie Kanäle bilden, in denen bei Bewegung des Kolbens (3) die Rollkörper (7) laufen.

2. Bausteinartiger Linearantrieb nach Anspruch 1, dadurch gekennzeichnet, daß die Rollkörper Kugeln (7) sind.

3. Bausteinartiger Linearantrieb nach Anspruch 1 oder 2, dadurch gekennzeichnet, daß mehrere Längsbohrungen (2) mit Kolben (3) in dem Zylinderkörper (1) vorgesehen sind.

4. Bausteinartiger Linearantrieb nach einem der Ansprüche 1 bis 3, dadurch gekennzeichnet, daß die Längsbohrungen (2) eine unrunde Form haben.

5. Bausteinartiger Linearantrieb nach einem der Ansprüche 1 bis 4, gekennzeichnet durch mehrere Befestigungsbohrungen im Zylinderkörper (1) und im Kopfteil (6).

## Claims

1. Modular actuator, usable as a load-bearing positioning element, comprising a cylinder body (1) with a longitudinal bore (2) in which a piston (3), which can be acted upon pneumatically or hydraulically by a pressure, is slidable which is connected via a piston rod (4) to a head part (6) on which there can be secured a part which is to be moved, there being provided between the cylinder body (1) and the head part (6) a linear guide arrangement having rolling elements (7) for relieving the piston (3) of lateral forces, characterised in that the head part (6) is made with a U-shaped cross-section and extends or overlaps over the cylinder body, the cylinder body (1) and the head part (6) being made of approximately the same length, and the head part (6) overlaps with the preponderant part of its length over the cylinder body, and that grooves are so arranged along the longitudinal outer sides of the cylinder body (1), and counter-grooves of substantially the same length along the overlapping longitudinal inner sides of the head part (6), that they form ducts in which the rolling elements (7) run when the piston (3) moves.

2. Modular actuator according to claim 1, characterised in that the rolling elements are balls (7).

3. Modular actuator according to claim 1 or 2, characterised in that a plurality of longitudinal bores (2) with pistons (3) are provided in the cylinder body (1).

4. Modular actuator according to one of claims 1 to 3, characterised in that the longitudinal bores (2) are of non-circular form.

5. Modular actuator according to one of claims 1 to 4, characterised by a plurality of securing holes in the cylinder body (1) and in the head part (6).

## Revendications

1. Mécanisme modulaire à déplacement linéaire par piston, utilisable en tant qu'élément de support réglable, lequel se compose d'un corps de cylindre (1) pourvu d'un alésage longitudinal (2) dans lequel peut coulisser un piston (3) pouvant être soumis à une pression pneumatique ou hydraulique, ce piston étant relié par une tige de piston (4) à un organe supérieur (6) auquel peut être fixée une pièce à déplacer, de façon à former entre ce corps de cylindre (1) et ledit organe supérieur (6) un guidage linéaire constitué par des éléments de roulement (7) ayant pour rôle de soulager le piston (3) des sollicitations latérales, ce mécanisme étant caractérisé en ce que ledit organe supérieur (6) a une section transversale en forme d'U inversé et chevauche le corps de cylindre (1), que cet organe supérieur (6) et le corps de cylindre (1) ont sensiblement la même longueur et que l'organe supérieur (6) recouvre le corps de cylindre (1) avec la majeure partie de sa longueur, et qu'il est prévu des gorges le long des côtés longitudinaux extérieurs du corps de cylindre (1) ainsi que des gorges correspondantes, de longueur sensiblement égale, le long des côtés longitudinaux intérieurs qui recouvrent les côtés longitudinaux du corps de cylindre (1), de telle sorte que ces gorges forment entre elles des canaux dans lesquels se déplacent les éléments de roulement (7) lors des mouvements du piston (3).

2. Mécanisme modulaire à déplacement linéaire selon la Revendication 1, caractérisé en ce que les éléments de roulement (7) sont constitués par des billes.

3. Mécanisme modulaire à déplacement linéaire selon l'une ou l'autre des Revendications 1 ou 2, caractérisé en ce qu'il est prévu plusieurs alésages longitudinaux (2) munis de pistons (3) dans le corps de cylindre (1).

4. Mécanisme modulaire à déplacement linéaire selon l'une quelconque des Revendications 1 à 3, caractérisé en ce que les alésages longitudinaux (2) ont une section non-circulaire.

5. Mécanisme modulaire à déplacement linéaire selon l'une quelconque des Revendications 1 à 4, caractérisé en ce qu' il est prévu plusieurs trous de fixation dans le corps de cylindre (1) et dans l'organe supérieur (6).

0 134 398

Fig. A

5   1   4   3   2   Lufteintritt

Fig. B

1   2   4

Fig. C